Europäisches Patentamt

European Patent Office

Office européen des brevets

(19)

(11) Veröffentlichungsnummer: **0 085 411**
**B1**

(12) **EUROPÄISCHE PATENTSCHRIFT**

(45) Veröffentlichungstag der Patentschrift:
11.06.86

(21) Anmeldenummer: 83100786.9

(22) Anmeldetag: 28.01.83

(51) Int. Cl.⁴: **F 25 B 29/00,** F 25 B 27/00,
F 02 G 5/00, F 01 P 3/00,
F 24 D 11/02

(54) Heiz- bzw. Kühleinrichtung.

(30) Priorität: 03.02.82 PC /AT82/000 03

(43) Veröffentlichungstag der Anmeldung:
10.08.83 Patentblatt 83/32

(45) Bekanntmachung des Hinweises auf die Patenterteilung:
11.06.86 Patentblatt 86/24

(84) Benannte Vertragsstaaten:
AT CH DE FR GB IT LI NL SE

(56) Entgegenhaltungen:
EP - A - 0 009 786
EP - A - 0 026 793
DE - A - 2 140 377
DE - A - 2 500 641
DE - A - 2 509 065
DE - A - 2 644 322
DE - A - 2 756 348
FR - A - 834 339
FR - A - 2 149 236
FR - A - 2 307 964
FR - A - 2 399 806
GB - A - 567 567
LU - A - 77 843
US - A - 1 915 104
US - A - 2 713 852
US - A - 3 782 496
US - A - 3 991 735
US - A - 4 257 369

(73) Patentinhaber: Söllner, Robert, Dr., Sieglstrasse 15,
A-6200 Jenbach (AT)
Patentinhaber: Söllner, Robert, Sieglstrasse 15,
A-6200 Jenbach (AT)

(72) Erfinder: Söllner, Robert, Dr., Sieglstrasse 15,
A-6200 Jenbach (AT)
Erfinder: Söllner, Robert, Sieglstrasse 15,
A-6200 Jenbach (AT)

(74) Vertreter: Torggler, Paul Dr. et al,
Wilhelm-Greil-Strasse 16, A-6020 Innsbruck (AT)

## Beschreibung

Die Erfindung bezieht sich auf eine in ein Gehäuse eingeschlossene Heiz- bzw. Kühleinrichtung mit mindestens einer von einem Verbrennungsmotor antreibbaren Wärmepumpe, wobei ein Wärmeträger Wärme von Motor und Wärmepumpe(n) zu einem Heizkreislauf überträgt.

### Charakteristik des bekannten Standes der Technik

Bekannt sind Kompressionswärmepumpen sowohl mit Antrieb durch Verbrennungsmotoren wie auch durch Elektromotoren.

Es wurde auch bereits vorgeschlagen (vgl. DE-A-27 28 273) über den Verbrennungsmotor einen Generator anzutreiben, der über eine Widerstandsheizung den Motor belastet.

Ebenso ist bekannt, die Abwärme eines Verbrennungsmotors durch Kühlwasser- und Abwärmetauscher nutzbar zu machen, in Sonderfällen sogar dadurch, daß diese Wärmetauscher in den Kreislauf einer Absorptionswärmepumpe eingebunden werden.

Zur Verbesserung der Heizziffer, das ist das Verhältnis der abgegebenen Wärme zur zugeführten Wärme in der Kompressions- oder Absorptionswärmepumpe, wurde auch bereits die Anordnung eines Zusatzbrenners in Verbindung mit Abgaswärmetauscher des Verbrennungsmotors vorgeschlagen.

### Aufgabe der Erfindung

Ein wesentlicher Teil des konstruktiven Aufwandes derartiger Einrichtungen entfällt auf Isolierungen verschiedener Art. Gemäß DE-A-30 14 357 läßt sich dieser Aufwand wesentlich herabsetzen, indem vorgesehen wird, daß das Gehäuse als doppelwandiger Wärmespeicher ausgebildet ist, wobei ein Wärmeträger zwischen Innenwand und Außenwand des Troges gespeichert ist und von dort zum Kühlmittelkreislauf des Motors und zum Kältemittelkreislauf einer Kompressionswärmepumpe, die in dem von der Innenwand des Wärmespeichers umschlossenen Raum angeordnet sind.

Die Erfindung geht von der Erkenntnis aus, daß bei den bekannten Einrichtungen entweder jedes einzelne Aggregat gegen die Ableitung von Schall und Wärme isoliert worden ist, was einen hohen konstruktiven Aufwand bedingt, oder aber daß alle Aggregate gemeinsam nach außen abgeschirmt worden sind, was zur Folge hat, daß ausströmendes Kältemittel andere Aggregate, insbesondere den Verbrennungsmotor, beschädigt.

### Darlegung des Wesens der Erfindung

Erfindungsgemäß läßt sich der aufgezeigte Nachteil dadurch vermeiden, daß der Verbrennungsmotor durch einen gasdichten Motorbehälter gegenüber der bzw. den Wärmepumpen isoliert ist, welcher den Verbrennungsmotor einschließlich der Kurbelwelle umschließt und von einer zentrisch gelagerten Abtriebswelle zumindest einmal durchsetzt ist.

Durch die erfindungsgemäße Anordnung des Verbrennungsmotors in einem gesonderten Behälter ist es zunächst möglich, den Motor selbst konstruktiv besonders einfach zu gestalten. Der Motorbehälter kann insbesondere außer dem Motor noch dessen Schmiermittelvorrat aufnehmen, wobei das Schmiermittel in bekannter Weise auch zur Kühlung des Motors herangezogen werden kann.

Besonders vorteilhaft ist es, durch den Motorbehälter vor allem die Abdichtung gegenüber dem Betriebsmittel der Wärmepumpen sicherzustellen, die Wärme- und Schallisolierung nach außen hingegen in bekannter Weise vorzunehmen, indem der Wärmeträger in der Wandung des alle Aggregate umschließenden Gehäuses gelagert wird. Auf diese Weise übernimmt nicht nur der ohnedies notwendige Wärmespeicher zusätzlich die Funktion der Schall- und Wärmedämmung, es wird außerdem eine saubere Trennung der Kreisläufe der Wärmepumpen und des Motors vom Wärmespeicher erreicht, sodaß die im Inneren des Wärmespeichers angeordneten Wärmetauscher und Antriebsaggregate konstruktiv einfach gestaltet, miteinander verbunden, und leicht aus- und eingebaut werden können. Dadurch, daß die im Inneren des Wärmespeichers angeordneten Wärmetauscher des Motors und der Wärmepumpen der Reihe nach vom Wärmeträger durchflossen werden, lassen sich diese Wärmetauscher so anordnen, daß jeder Kontakt der Betriebsmittel der Wärmepumpen mit dem Antriebsmotor vermieden wird, was eine unbedingte Voraussetzung für dessen längeres Funktionieren ist.

### Beschreibung der Zeichnungsfiguren

Weitere Einzelheiten der Erfindung werden anschließend anhand der Zeichnungen diskutiert. Dabei zeigen

Fig. 1 das Kreislaufschema eines Ausführungsbeispiels,

Fig. 2 den Verbrennungsmotor schematisch von der Seite,

Fig. 3 und 4 denselben Motor in teilweise geschnittener Vorderansicht und Draufsicht,

Fig. 5 bis 7 Varianten der Abgasleitung samt Zusatzbrenner,

Fig. 8 den Abgaswärmetauscher von oben in horizontalem Schnitt durch die Vorkammer,

Fig. 9 und 10 die zugehörigen Vertikalschnitte.

In Fig. 11 ist schematisch die gegenseitige räumliche Zuordnung der Aggregate des gesamten Einrichtung dargestellt.

### Beschreibung von bevorzugten Ausführungsbeispielen

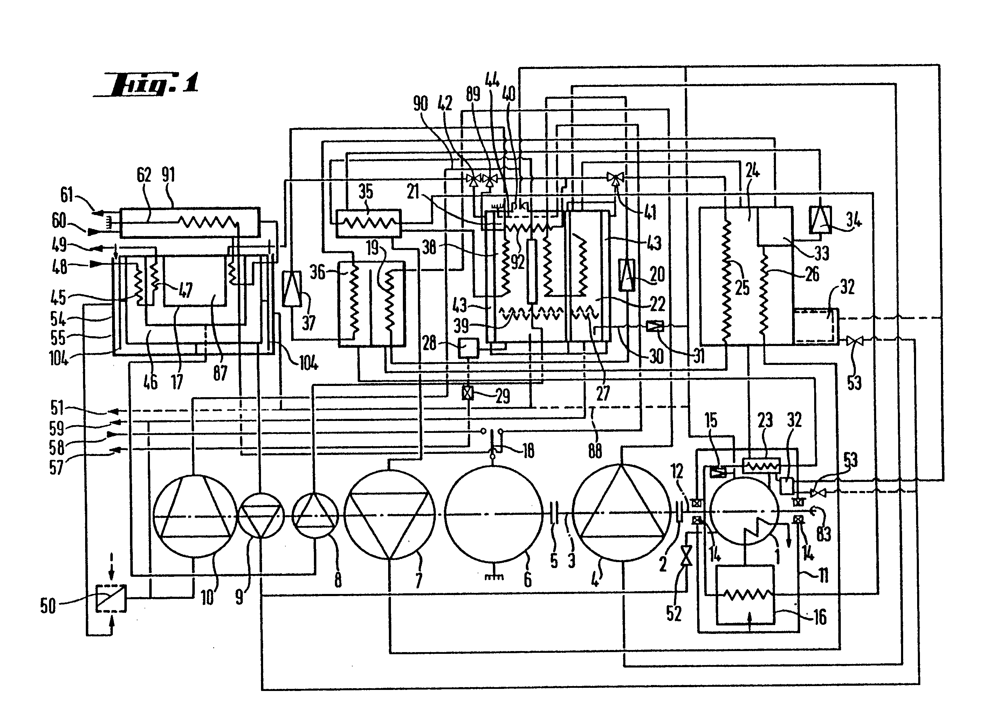

Fig. 1 zeigt ein Kreislaufschema bei der Anwendung der Heizmaschine zu Heizzwecken.

Angetrieben wird die Heizmaschine vorzugsweise durch den Verbrennungsmotor 1, der über eine Schaltkupplung 2 mit einem Wellenstrang 3 verbunden ist. In diesen Wellenstrang 3 wird ein Verdichter 4 für das Kältemittel der Kompressionswärmepumpe, eine weitere Schaltkupplung 5, ein Elektromotor 6, eine Lösungspumpe 7 für das Stoffpaar der Absorptionswärmepumpe, zumindest eine Umwälzpumpe 8, bei Bedarf eine Brennstoffpumpe 9 und zumindest ein Gebläse 10 kraftschlüssig eingebunden. Bei Bedarf wird aus konstruktiven Gründen ein nicht gezeichnetes Zwischengetriebe angeordnet, das die Drehzahl zumindest eines Teiles der angetriebenen Maschinen gegenüber der der antreibenden Maschinen erhöht.

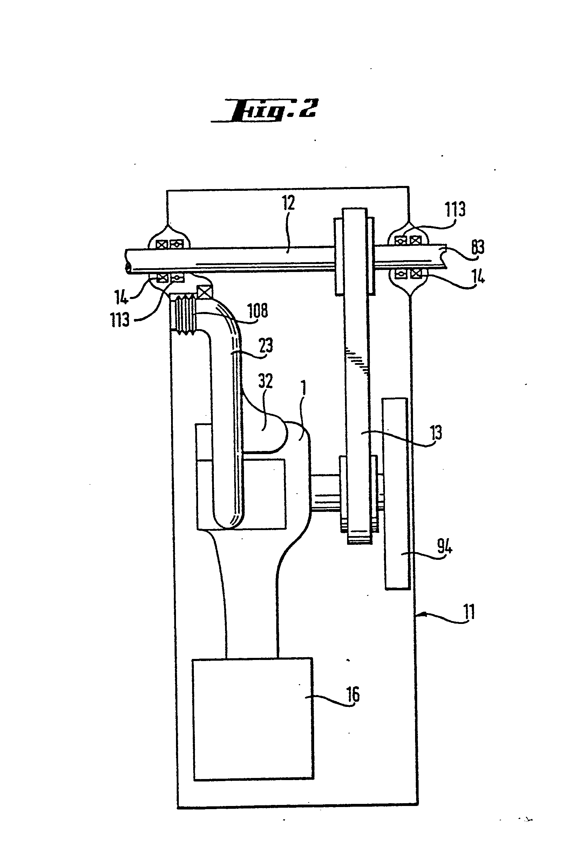

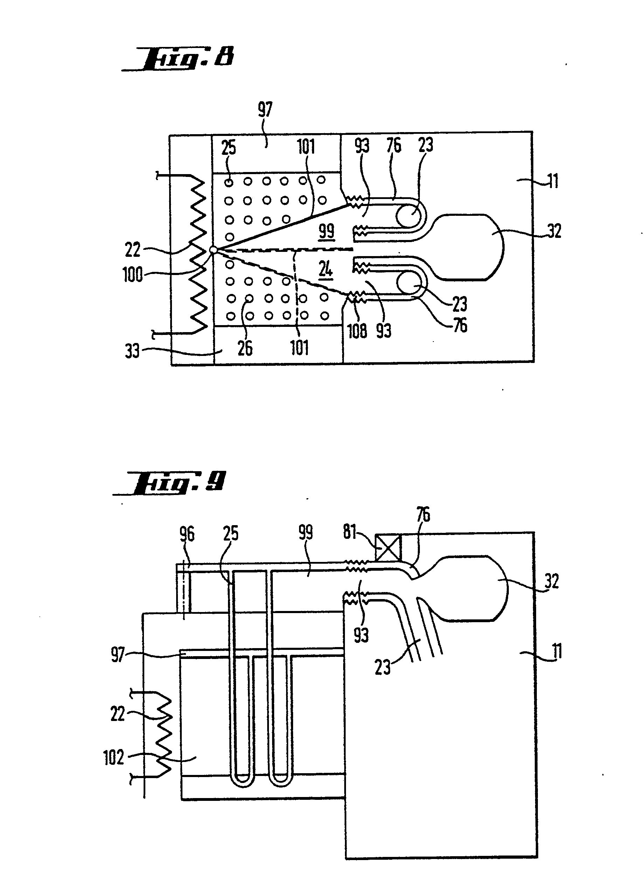

Der Verbrennungsmotor 1 (vgl. Fig. 2 - 4) ist in einem gasdichten Motorbehälter 11 untergebracht, der nur bei der (den) Durchführung(en) der Abtriebswelle 12 eine, allenfalls auch zwei Wellendichtungen 14 besitzt. Alle anderen Leitungsdurchführungen sind fest verschraubt. Um den Wellendichtungen 14 eine hohe Lebensdauer zu geben, wird in besonderer Ausgestaltung der Erfindung die Kraftübertragung zur Abtriebswelle 12 durch ein elastisches Element 13 gebildet, so daß die Wellenabdichtung 14 eine Welle abdichtet, die eine rein rotierende Bewegung macht und nicht eine Kurbelwellendurchführung abdichten muß, die immer, wenn auch geringe, Taumelbewegungen ausführt. Zudem wird bei arbeitendem Verbrennungsmotor 1 das ständig aus den Zylinder(n) 63 in geringen Mengen ausströmende Gas wieder über eine Drossel 15 zugeführt, sodaß im Motorbehälter 11 ständig ein gewisser Überdruck gegen den übrigen Apparateraum 87 herrscht und daher kein Stoffgemisch aus dem Apparateraum 87 in das Gehäuse 11 eindringen kann. Dies ist für die Lebensdauer des Verbrennungsmotors 1 besonders wichtig.

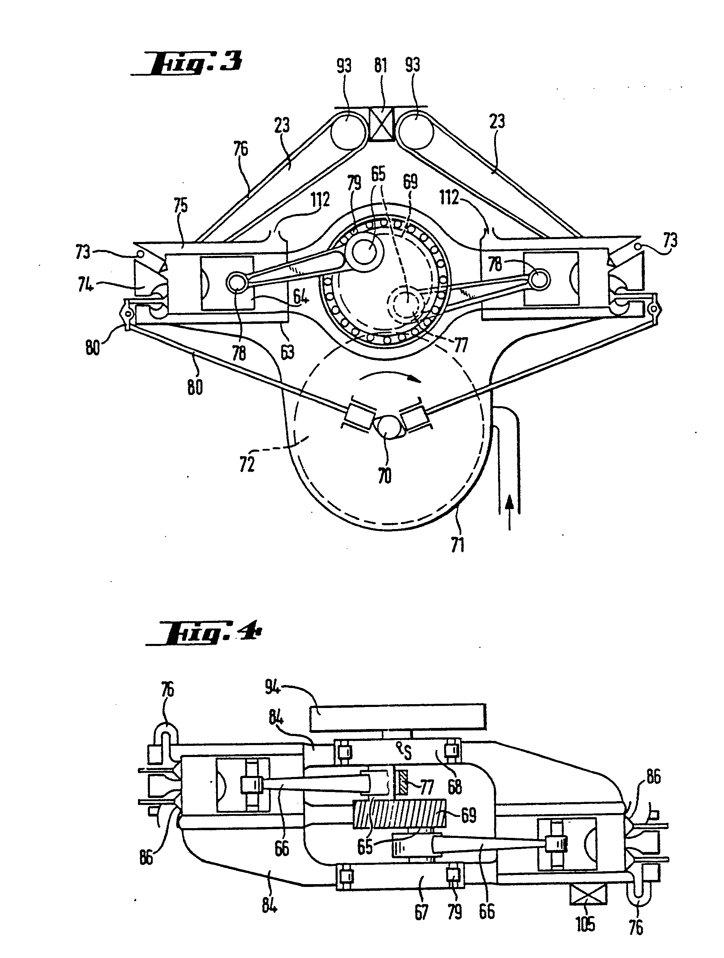

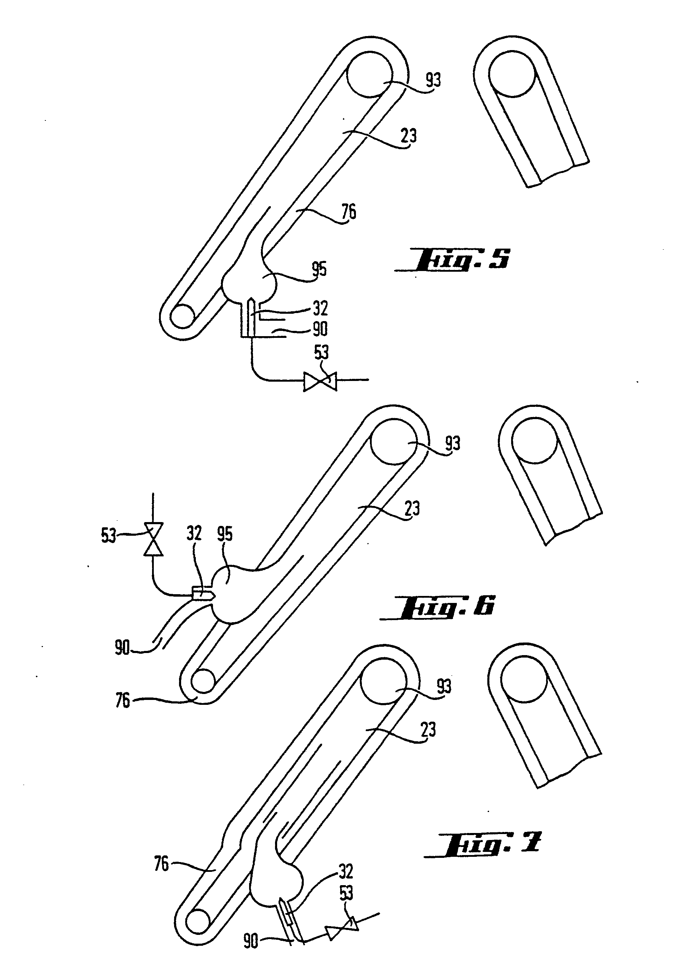

In besonderer Ausgestaltung der Erfindung erhält der Motorbehälter 11 ein gegenüber den bekannten Ausführungen übergroßes Unterteil, in dem ein Schmierölvorrat für mindestens ein Jahr Betriebszeit enthalten ist. Dieser Schmierölvorrat dient auch als Wärmespeicher und hält die Betriebstemperatur in engeren Grenzen konstant, als dies bei bekannten Motorausführungen üblich ist. Auch dieser Umstand wirkt sich günstig auf den Verschleiß und damit auch auf die Lebensdauer des Verbrennungsmotors 1 aus. Im Unterteil des Motorhälters 11 ist ein Schmieröl-Wärmetauscher 16 angeordnet, der einerseits vom Motorschmieröl, andererseits vom Wärmeträger eines Wärmespeichers 17 durchströmt wird. Der Wärmeträger wird aus dem unteren, daher infolge der Temperaturschichtung kühleren Teil des Wärmespeichers 17 entnommen. Ist der Wärmespeicher 17 aufgeheizt, setzt eine automatische Steuerung die Heizmaschine still. Daher kann der Verbrennungsmotor 1 weder überhitzt noch unterkühlt werden. Das Schmieröl dient nicht nur zur Schmierung, sondern auch zur Kühlung des Verbrennungsmotors 1 (Fig. 3). In Fig. 1 ist der Verbrennungsmotor 1 daher ebenfalls als Wärmetauscher dargestellt.

Das Anlassen des Verbrennungsmotors 1 erfolgt über den Elektromotor 6 bei Anlegen des Wechselschalters 18 an den elektrischen Netzanschluß 58 und geschlossenen Schaltkupplungen 2 und 5. Um den Stromstoß beim Zuschalten des Elektromotors 6 zu verringern, ist vorgesehen, in an sich bekannter Weise ohmsche Widerstände zuzuschalten. Sie sind durch das Vorheizgitter 44 und die Brauchwasserzusatzheizung 62 gegeben.

Bleiben nach dem Start des Elektromotors 6 die Schaltkupplungen 2 und 5 geschlossen, so werden der Verdichter 4 und die mit dem Wellenstrang 3 kraftschlüssig verbundenen Maschinen 7, 8, 9, 10 sowie der leerlaufende Elektromotor 6 angetrieben. Der Verdichter 4 setzt den Kreislauf einer Kompressionswärmepumpe in Gang, der sich über den Kondensatorteil 19 für die Kompressionswärmepumpe, das Drosselventil 20, den Verdampferteil 21 für die Wärmequelle, beispielsweise Außen- oder Umluft, sowie den Verdampferteil 22 für das Verbrennungsmotorabgas schließt.

Sobald der Verbrennungsmotor 1 genügend belastet läuft, gibt er einerseits Wärme über das Schmieröl an den Schmierölwärmetauscher 16 als auch über seine gekühlte Auspuffleitung 23 an den Wärmeträger des Wärmespeichers 17 ab, andererseits wird sein heißes Abgas in einem Abgaswärmetauscher 24 stark abgekühlt. Die hierbei abgegebene Wärme wird je nach Beaufschlagung der Tauscherfläche 25 an den Wärmeträger des Wärmespeichers 17 oder der Tauscherfläche 26 an den Austreiber des Kreislaufs der Absorptionswärmepumpe übertragen. Das Abgas wird durch den Verdampferteil für Abgas 22 geleitet und hier vorzugsweise bis unter den Taupunkt abgekühlt. Das anfallende Kondensat wird von einem Wasserabscheider 27 in einen Kondensatbehälter 28 und von dort über ein Kondensatventil 29 bei 57 nach außen abgeführt. Das Kondensat entfernt dabei wasserlösliche Schadstoffe, wie beispielsweise Stickoxyde, und vermindert damit den Schadstoffgehalt des Abgases. Ein durch die Drossel 31 mengenmäßig einstellbarer Teil des entwässerten Abgases wird durch die Abzweigung 30 und die einstellbare Drossel 31 wieder mit Verbrennungsluft vermischt und dem Verbrennungsmotor 1 zugeführt. Diese an sich bekannte Methode der Rückführung gekühlten Abgases vermindert ebenfalls die Bildung von Schadstoffen bei der motorischen Verbrennung. Das übrige, unter den Taupunkt gekühlte Abgas wird wahlweise zum Auspuff 59 geleitet oder zur weiteren Ausnützung der Abgaswärme zum Teil wieder der von Gebläse 10 angesaugten Frisch- oder Umluft zugesetzt. Bei Anwendung dieser Methode wird unter Umständen die Rückführung gekühlten Abgases durch die Abzweigung 30 entfallen.

Um die Abgaswärme noch besser als durch Wärmetauschung ausnutzen zu können, ist vorgesehen, dem Abgaswärmetauscher 24 eine mehrfache Funktion zuzuordnen. Fig. 1, 8 und 9 zeigen, daß die Abgaswärme übernehmende Tauscherflächen 25 und 26 wahlweise beaufschlagt werden können, und zwar sowohl durch das Abgas des Verbrennungsmotors 1 als auch durch das Abgas des Zusatzbrenners 32. Im Austreiber mit der Tauscherfläche 26 und dem nachgeschalteten Abscheider 33 wird das im Kreislauf der Absorptionswärmepumpe strömende Stoffpaar durch Wärmezufuhr in den flüssigen Teil, z.B. Wasser, und den gasförmigen Teil, z.B. Ammoniak, zerlegt. Der flüssige Teil wird über ein Drosselventil 34 zum Absorber 35 geführt, wo seine Temperatur unter Warmeabgabe an den relativ kalten Wärmeträger aus dem unteren Teil des Wärmespeichers 17 soweit sinkt, daß der getrennt zugeführte gasförmige Teil wieder gelöst werden kann, wobei die Temperatur der entstehenden Lösung weiter sinkt. Der gasförmige Teil wird aus dem Abscheider 33 zum Kondensatorteil für den Absorptionswärmepumpen-Kreislauf 36 geführt, wo er Wärme an den Wärmeträger des Wärmespeichers 17 abgibt. Sodann wird sein Druck in einem Drosselventil 37 reduziert und gleichzeitig die Temperatur gesenkt. In diesem entspannten und abgekühlten Zustand durchfließt der gasförmige Teil des Stoffpaares, beispielsweise Ammoniak, den Verdampferteil des Absorptionswärmepumpen-Kreislaufes 38, wo er aus der Wärmequelle, beispielsweise Luft, Wärme aufnimmt. Im wieder erwämten Zustand fließt der gasförmige Teil zum Absorber 35, wo er wieder im flüssigen Teil gelöst wird. Die Lösung wird der Lösungspumpe 7 zugeführt, die sie unter Druckerhöhung in den die Tauscherfläche 26 aufweisenden Austreiber fördert.

Die in den Verdampferteilen 21 und 38 vorzugsweise bis unter den Taupunkt abgekühlte Luft verliert Kondensat, das über einen Kondensatabscheider 39 gemeinsam mit dem Kondensat aus dem Verdampferteil 22 für Abgas in den Kondensatbehälter 28 abfließt. Die gekühlte Abluft wird nach außen abgeführt. Es entspricht dem Erfindungsgedanken, Luft für die Verbrennung im Verbrennungsmotor 1 aus dieser Abluftleitung zu entnehmen, so lange gewährleistet ist, daß sie keine für den Verbrennungsmotor 1 schädlichen Bestandteile aus den Wärmepumpen-Kreisläufen enthalten kann. Dies setz voraus, daß die von Kältemittel bzw. dem gasförmigen Teil des Stoffpaares durchflossenen Wärmetauscher im Verdampfer absolut dicht sind. Die Entnahmeleitung 88 ist strichliert eingezeichnet. Zweck dieser Maßnahme ist, die Füllung des Motors und damit seine Leistung zu verbessern und die Bildung von Ruß bei der Verbrennung zu verhindern. Weiters ist vorgesehen, in die Zuluftleitung 90 vor den Verdampferteilen 21 und 38 eine Injektordüse 40 einzubauen, welche Luft aus dem Apparateraum 87 der Heizmaschine ansaugt und die Durchlüftung des Apparateraumes unterstützt. Die im Apparateraum durch Abstrahlung und Konvektion entstehende Wärme wird hierbei durch die Verdampferteile 21 und 38 nutzbringend verwertet. Es entspricht auch dem Sinn der Erfindung, für diese Durchlüftung des Apparateraumes ein besonderes Gebläse auf dem Wellenstrang 3 anzubringen.

Der Wärmespeicher 17 hat zwei Anschlüsse 48, 49 für Vor- und Rücklauf der Heizanlage mit Wärmetauscher 47, zwei Anschlüsse 60, 61 für Zu- und Ablauf zum Brauchwasserbehälter 91 mit Wärmetauscher 62 sowie zwei für den Kreislauf des Wärmeträgers in der Heizmaschine. Außerdem sind gegebenenfall Anschlüsse für die Zufuhr von Abwärme aus anderen Geräten, beispielsweise aus Sonnenkollektoren, vorgesehen.

Vom unteren Teil des Wärmetauschers 17 ausgehend, durchströmt der Wärmeträger bei stufenweise ansteigender Temperatur folgende Geräte:
- Absorber 35 im Absorptionswärmepumpen-Kreislauf,
- Innenkühlung des Verbrennungsmotors 1 über Wärmetauscher 16,
- gekühlte Auspuffleitung 23
- Kondensatorteile 36 und 19
- Abgaswärmetauscher 24 / Tauscherfläche 25
- Dreiweghähne 41, 42
und endet im oberen, wärmeren Teil des Wärmespeichers 17.

Durch Umschalten der Dreiweghähne 41 und 42 kann der Wärmeträger zur Enteisung des Verdampfers über den Heizmantel 43 geführt werden, welcher alle Eisbildungen an den Wänden beseitigt.

Zur Unterstützung der Enteisung wird außerdem bei Bedarf der Elektromotor 6 als Generator benutzt und nach Umlegen des Wechselschalters 18 das elektrische Vorheizgitter 44 erwärmt. Es entspricht ebenso dem Zweck der Erfindung, dieses Vorheizgitter als Belastungswiderstand für den als Generator benutzten Elektromotor 6 und damit auch für den Verbrennungsmotor 1 zu benutzen. Wenn nämlich die Außentemperatur bei Verwendung von Luft als Wärmequelle sehr tief absinkt, vermindert sich die Belastung des Verbrennungsmotors 1 und damit seine Leistung. Die Heizziffer wird dadurch und außerdem durch die größeren Temperaturunterschiede zwischen Wärmequelle und Wärmeträger schlechter. Es ist daher besonders vorteilhaft, diesen Temperaturunterschied durch die elektrische Vorheizung zu verringern. Es entspricht aber auch dem Sinn der Erfindung, zur Vorheizung einen Wärmetauscher 92 einzubauen und mit warmer Flüssigkeit, beispielsweise dem Wärmeträger, bei Bedarf zu beschicken. Er wird über einen Dreiweghahn 89 in den Wärmeträger-Kreislauf eingeschaltet.

Der Wärmespeicher 17 wird anstelle einer Wärmeisolation vorzugsweise von einem Brennstoffbehälter 46 umgeben; der Vorlauf 48 des Heizsystems durchströmt einen Wärmetauscher 45 im Brennstoffbehälter 46. Er hält also den Brennstoff selbst und daher auch die Außenwand des Brennstoffbehälters 46 auf einer relativ niedrigen Temperatur. Wenn der Brennstoffbehälter 46 sich teilweise entleert, wirkt der entstehende Luftraum als Isolationsschicht. Der Vorlaufanschluß 48 führt also zum Wärmetauscher 45, und anschließend zu einem Wärmetauscher 47, der sich vom kälteren unteren Teil des Wärmespeichers 17 zum oberen, wärmeren Teil des Wärmespeichers 17 erstreckt. An diesen Wärmetauscher 47 schließt der Rücklaufanschluß 49 des Heizsystems an.

Für die Erhaltung und die Lebensdauer der Heizanschlüsse ist es vorteilhaft, wenn keine äußeren Systeme mit den einzelnen Apparaten verbunden sind, also der Wärmetransport innerhalb des Systems durch einen geschlossenen Wärmeträger-Kreislauf erfolgt. Es entspricht aber auch dem Sinn der Erfindung, wenn einzelne Geräte, beispielsweise der Absorber 35, von einem Stoff mit niedrigerer Temperatur, beispielsweise Heizwasser unter Vorlauftemperatur, durchströmt wird.

Die Versorgung mit Verbrennungsluft erfolgt bei Heizmaschinen, die Luft als Wärmequelle benutzen, vorzugsweise aus dem offenen Kreislauf der Wärmequelle. Er beginnt bei einer Umschaltklappe 50 für Frischluft oder Umluft und führt über das Gebläse 10 zu den Verdampferteilen 21 und 38 mit einer bereits vorher erwähnten Entnahmeleitung 88 der Verbrennungsluft für Verbrennungsmotor 1 und Zusatzbrenner 32. Die Abluft wird durch eine Abluftöffnung 51 nach außen bzw. zwischen den Mantel 54 des Brennstoffbehälters 46 und die Verschalung 55 abgeführt.

Bei beispielsweiser Verwendung von Wasser als Wärmequelle wird das Gebläse 10 entsprechend kleiner ausgelegt und dient nur mehr der Versorgung der Heizmaschine mit Verbrennungsluft wie auch der Durchlüftung des Apparateraumes. Die Verdampferteile 21 und 38 werden von dem Wasser der Wärmequelle durchströmt, wobei naturgemäß der Kondensatabscheider 39 und die Entnahmeleitung 88 entfallen.

Der Brennstoff wird, falls er in flüssiger Form und drucklos zur Verfügung steht, dem Brennstoffbehälter 46 entnommen und durch eine Brennstoffpumpe 9 über Absperrventile 52 bzw.53 bei Bedarf dem Verbrennungsmotor 1 bzw. dem Zusatzbrenner 32 zugeleitet.

Der Brennstoffbehälter 46 ist an seiner Außenseite mit einem schlecht wärmeleitenden und schallabsorbierenden Mantel 54 ganz oder teilweise verkleidet. Er setzt sich nach unten, im Bereich der als Auffangwanne dienenden Verschalung 55 in Form einer Doppelwand 104 bis fast zum Boden der Verschalung 55 fort. Diese Doppelwand dient ebenfalls der Wärmedämmung. Außerhalb dieses Mantels 54 befindet sich nochmals eine nach unten und den Seitenflächen dichte Verschalung 55. Der Zwischenraum dient vorzugsweise als Ansaug- und Ausblasgeräuschdämpfer für Frischluft und Abluft, wie aus der Fig. 1 hervorgeht, sowie auch - im Notfall - als Auffangwanne für Brennstoff, der etwa aus einem undicht gewordenen Teil des Brennstoffsystems ausfließt; aus diesem Grund sind die Anschlüsse für Zu- und Abluft entsprechend höher gelegt.

Der Verbrennungsmotor 1 besitzt vorzugsweise - vor allem wegen des guten Massenausgleiches - zwei Zylinder 63 in Boxeranordnung, also mit gegenläufig arbeitenden Kolben 64, einer Kurbelwelle 65, zwei Pleuelstangen 66 und einem Schwungrad 94. Die Kurbelwelle 65 besteht in beispielsweiser Ausführung aus drei kreisförmigen Kurbelwangen 67, 68 und 69, wovon 67 und 68 als innere Rollbahn für beispielsweise je ein Zylinderrollenlager als Hauptlager 79 dienen, während die mittlere Kurbelwange 69 als Antriebszahnrad für die Nockenwelle 70 und als Ölpumpenzahnrad 72 ausgebildet ist.

Das Ölpumpenzahnrad 72 dreht sich im Ölpumpengehäuse 71, das die beispielsweise zwei Zylinder 63 kraftschlüssig verbindet. Das durch den Schmieröl-Wärmetauscher 16 angesaugte Schmieröl wird durch das als Hohlrippe ausgebildete Ölpumpengehäuse 71 den Zylindern 63 zugeführt, wo es vorzugsweise durch den bzw. die Düsenhalter 73 in den Zylinderdeckel 74 und von dort in den Zylinderkühlmantel 75 eintritt. Das Öl fließt aus der höchsten Stelle frei in den Ölsumpf zurück. So kann das Kühlsystem des Verbrennungsmotors 1 nie trocken sein.

Die Pleuellager 77 werden vorzugsweise über Bohrungen in der Kurbelwange 69 und der Kurbelwelle 65, ebenso die nicht gezeichneten Nockenwellenlager, über Bohrungen des Ölpumpenzahnrades 72 und der Nockenwelle 70 mit Öl versorgt. Alle übrigen Teile des Triebwerkes, wie Kolben 64, Pleuelbüchse 78, Hauptlager 79 und Ventilsteuerung 80, werden durch Spritzöl geschmiert.

Die vom Wärmeträger durch den Kühlmantel 76 gekühlten Auspuffleitungen 23 dienen gleichzeitig als Motoraufhängung, wofür ein elastisches Element 81 über dem Motorschwerpunkt S angeordnet ist. Querkräfte, wie sie besonders beim Anfahren und Auslaufen des Verbrennungsmotors 1 auftreten können, werden in an sich bekannter Weise durch mindestens ein weiteres elastisches Element 105 aufgefangen. In besonderer Ausgestaltung der Erfindung wird die Abgasleitung so lang ausgeführt, daß sie den Ladungswechsel in den Zylindern 63 fördert und als Diffusor die Strömungsgeschwindigkeit vor dem Eintritt in den Abgaswärmetauscher 24 verringert. Die Eintrittsöffnungen 93 für Abgas werden von der Überleitung des Wärmeträgers bzw. dem Kühlmantel 76 umfaßt, beispielsweise durch zwei konzentrisch angeordnete Kompensatoren. Die Abtriebswelle 12 besitzt eine Andrehklaue 83 für den Handstart des Verbrennungsmotors 21 über die Kraftübertragung 13, wodurch die Heizmaschine vom Netz unabhängig wird.

Der Verbrennungsmotor 1 besitzt in der vorzugsweise gezeichneten Ausführung weder ein Kurbelgehäuse noch Kühlmäntel für eine besondere Kühlflüssigkeit. Das in außergewöhnlich einfacher Form ausgeführte Gerippe des Motors besteht also nur aus mindestens einer, vorzugsweise drei Rippen, nämlich dem Ölpumpengehäuse 71 und den beiden, die Hauptlager 79 aufnehmenden Rippen 84.

Es entspricht auch dem Sinn der Erfindung, das Schwungrad 94 als Anker des Elektromotors 6 auszubilden, wobei allerdings auf einige Vorteile bei der Wahl des Antriebs, wie sie vorher genannt sind, verzichtet werden müßte.

Die Motorabgase gelangen durch die Abgaseintrittsöffnungen 93 in den Abgaswärmetauscher 24.

Die Verbrennungsluft wird durch die Entnahmeleitung 88 gemäß Schema in Fig. 1 zugeführt.

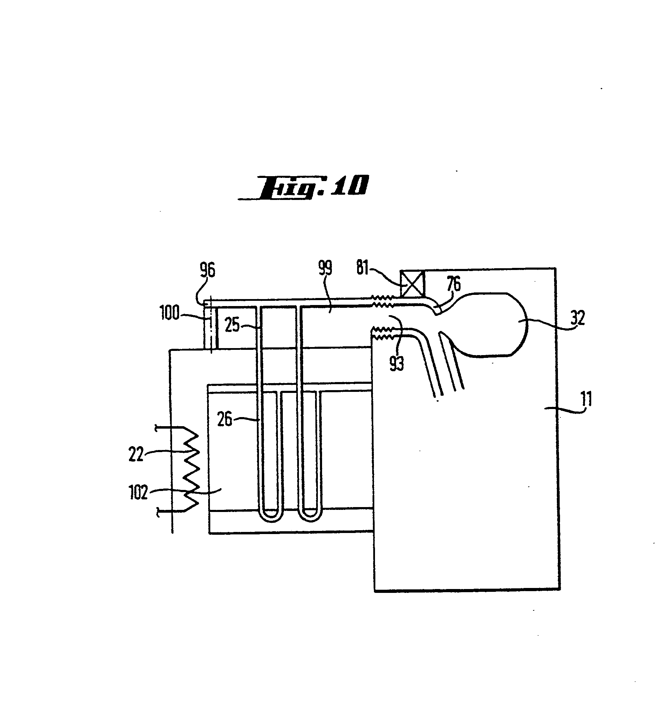

In weiterer Ausgestaltung der Erfindung wird zumindest eine gekühlte Auspuffleitung 23 als Nachbrennkammer für den Zusatzbrenner 32 benutzt, wofür sie durch ihre Länge besonders geeignet ist. Fig. 5, 6 und 7 zeigen beispielsweise Anordnungen. Daher besitzt mindestens eine gekühlte Auspuffleitung 23 eine angebaute Brennkammer 95, in die eine Abzweigung der Zuluftleitung 90 und eine Brennstoffleitung nach dem Absperrventil 53 einmünden. Die Zündeinrichtung ist nicht gezeichnet.

Die in der Brennkammer 95 entstehende Flamme wird vorzugsweise parallel zum Auspuffstrom unter entsprechender Querschnittsvergrößerung der Auspuffleitung eingeführt. Die den Ladungswechsel des Verbrennungsmotors 1 begünstigende Länge der Auspuffleitung ermöglicht ebenso eine freie Entwicklung der Brennerflamme und völliges Ausbrennen des Brennstoffes einschließlich etwa im Motorabgas noch enthaltener unverbrauchter Brennstoffteilchen.

Wahlweise kann auch jede der beispielsweise zwei gekühlten Auspuffleitungen 23 unter sinngemäß gleicher Ausbildung mit je einem Zusatzbrenner und Brennkammer 95 versehen sein, die mit gleichem oder - zur erhöhten Absicherung der Heizwärmelieferung - mit verschiedenen Brennstoffen beschickt werden.

Der Abgaswärmetauscher 24 ist in vorzugsweiser Ausgestaltung der Erfindung mit dem Motorbehälter 11 und dem Verdampferteil für Abgas 22, also auch mit den Verdampferteilen 21 und 38, zusammengebaut, um elastische Abdichtungen zu vermeiden. Fig. 9 zeigt eine beispielsweise Anordnung der Einführung der gekühlten Auspuffleitung 23 mit Kühlmantel 76 in den Abgaswärmetauscher 24, wobei die Trennwand vorzugsweise mit der Wand des Motorbehälters 11 verschraubt ist.

Die Eintrittsöffnungen 93 und die Einmündung eines eventuell gesondert angeordneten Zusatzbrenners 32 sind vorzugsweise symmetrisch angeordnet. Das elastische Element 81 liegt über oder unter den den Verbrennungsmotor 1 tragenden gekühlten Abgasleitungen 23.

Fig. 8 zeigt einen horizontalen Schnitt durch die Vorkammer 99, Fig. 9 einen vertikalen Schnitt durch den Wärmetauscher für den Wärmeträger.

Die Abgase des Verbrennungsmotors 1 treten durch die Eintrittsöffnungen 93 in die Abgasvorkammer 99 des Abgaswärmetauschers 24, die oben und außen durch eine Wärmeträger-Vorkammer 96, unten durch eine Wärmeträger-Nachkammer 97 begrenzt ist. Eine Schaltklappe 101 ermöglicht die Ableitung des Abgasstromes entweder zum Abgaswärmetauscher oder zum Austreiber oder aber auch in Mittelstellung zu beiden.

Die Schaltklappe 101 ist mit einer Achse 100 beweglich gelagert und willkürlich durch eine an sich bekannte Stellvorrichtung zu betätigen. Das Abgas tritt in den Sektoren der beiden Tauscherflächen, die beispielsweise als Röhrenbündel ausgebildet sein können, in die unter der Wärmeträger-Nachkammer 97 liegenden Räume. Nach Richtungsumkehr unterhalb der Trennwände 102 bzw. 103 treten sie in den Verdampferteil für Abgas 22 ein.

Der Wärmeträger strömt aus den Kühlmänteln 76 in eine Wärmeträger-Vorkammer 96, durch die beispielsweise gezeichneten Kühlrohre 25 über eine Wärmeträger-Nachkammer 97 im vorbeschriebenen Kreislauf (Fig. 1) weiter. Die Nachkammer 97 enthält einen Dampfabscheider.

Das Stoffpaar der Absorptionswärmepumpe tritt analog in die beispielsweise als Röhrenwärmetauscher gezeichnete Tauscherfläche 26 für den Austreiber ein (Fig. 10) und gelangt in den Abscheider 33, von wo die beiden Teile des Stoffpaares in getrennten Kreisläufen weiterfließen.

Fig. 11 zeigt die Anordnung der Apparate im Apparateraum 87. Vorzugsweise im unteren Teil des Apparateraums ist der Verbrennungsmotor 1 in seinem Motorbehälter 11 angebracht. Dieser Motorbehälter 11 wird nur von der Abtriebswelle 12 mit Wellendichtungen 14 und von den Austrittsöffnungen 93 mit den Kompensatoren 108 durchbrochen bzw. abgedichtet. Die Abtriebswelle 12 setzt sich über die Kupplung 2 im Wellenstrang 3 fort, welcher die bereits vorher beschriebenen Apparate trägt. Die Abtriebswelle 12 und der Wellenstrang 3 sind vorzugsweise in Wälzlagern 113 gelagert.

Der Verdampfer mit den Verdampferteilen 22 für Abgas, 21 für die Wärmequelle und 38 für die Absorptionswärmepumpe ist starr mit dem Abgaswärmetauscher 24 verbunden. Der Abgasdurchtritt erfolgt in einer freigehaltenen Öffnung 115. Die Heizmäntel 43 entstehen durch Bildung einer Doppelwand.

Ebenso schließt starr an der Kondensatorteil 19 für die Kompressionswärmepumpe und 36 für den Abgaswärmepumpen-Kreislauf. Den Abschluß dieses Wärmetauscherblockes bildet der Absorber 35.

Die Verbindungen unter den einzelnen Wärmetauschern sind nicht gezeichnet, sie liegen vorzugsweise seitlich neben den Wärmetauschern.

Der trogförmig ausgebildete Wärmespeicher 17 endet vorzugsweise etwa in der Höhe der Oberkante der Wärmetauscher. Dasselbe gilt für Brennstoffbehälter 46, den Mantel 54 und die Verschalung 55. Der Mantel 54 ist im oberen Teil mit einer Dämpfermatte 116 und Lochblech ausgeführt und dient dort als Schallabsorptionsfläche.

Die als Wärmequelle benutzte Luft bzw. Verbrennungsluft tritt in dem Spalt zwischen Verschalung 55 und Mantel ein und wird beispielsweise durch einen Zuluftkanal 117 zum Gebläse 10 geführt.

Das gekühlte und entwässerte Abgas tritt aus dem Verdampferteil für Abgas 22 in den Raum zwischen unterer Begrenzungsfläche der Wärmetauscher bzw. Motorbehälter 11 und Innenwand des Wärmespeichers 17, strömt durch einen Abgaskanal 118 in den Raum zwischen Verschalung 55 und Mantel 54, welcher ebenfalls wieder schallabsorbierend ausgekleidet ist, und strömt von dort ab. Die Abluft aus der Wärmequelle kann mit der Verbrennungsluft gemeinsam oder auch getrennt durch eine seitlich angeordnete Abströmöffnung abgeführt werden.

Der Brauchwasserbehälter 91 ist vorzugsreise ebenfalls umgekehrt trogförmig ausgebildet und auf den Wärmespeicher 17 bzw. Brennstoffbehälter 46 schall- und wärmedicht aufgesetzt. Er wird vorzugsweise klappbar angeordnet, um bei Entleerung leicht geöffnet zu werden. Er wird in an sich bekannter Weise durch eine Isolation 106 gegen Wärmeverlust geschützt.

Diese Anordnung gewährleistet die leichte Zugänglichkeit aller Apparate zur Wartung und Instandhaltung. Der Verbrennungsmotor 1 kann samt seinem rotorbehälter 11 nach oben ausgebaut werden. Dasselbe gilt für die Apparate auf dem Wellenstrang 3 und - nach ihrer Entfernung - auch für den zusammengebauten Block aller Wärmetauscher. Dieser Block hat eine federnde Verbindung 114 mit dem Wärmespeicher 17.

## Patentansprüche

1. In ein Gehäuse eingeschlossene Heiz- bzw. Kühleinrichtung mit mindestens einer von einem Verbrennungsmotor antreibbaren Wärmepumpe, wobei ein Wärmeträger Wärme von Motor und Wärmepumpe(n) zu einem Heizkreislauf überträgt, dadurch gekennzeichnet, daß der Verbrennungsmotor (1) durch einen gasdichten Motorbehälter (11) gegenüber der bzw. den Wärmepumpen isoliert ist, welcher den Verbrennungsmotor (1) einschließlich der Kurbelwelle (65) umschließt und von einer zentrisch gelagerten Abtriebswelle (12) zumindest einmal durchsetzt ist.

2. Heiz- bzw. Kühleinrichtung nach Anspruch 1, dadurch gekennzeichnet, daß der Verbrennungsmotor (1) im Motorbehälter (11) elastisch aufgehängt ist.

3. Heiz- bzw. Kühleinrichtung nach Anspruch 1, dadurch gekennzeichnet, daß der Motorbehälter (11) einen vorzugsweise einen Jahresvorrat fassenden Vorratsbehälter für das Schmieröl des Verbrennungsmotors (1) bildet.

4. Heiz- bzw. Kühleinrichtung nach Anspruch 3, dadurch gekennzeichnet, daß im Motorbehälter (11) ein Schmierölwärmetauscher (16) untergebracht ist.

5. Heiz- bzw. Kühleinrichtung nach Anspruch 1 oder 3, dadurch gekennzeichnet, daß der bzw. die Zylinder (63) des Verbrennungsmotors (1) miteinander, bzw. den Hauptlagerstühlen und dem Anschluß des Schmierölwärmetauschers (16) nur durch mindestens eine Rippe (84) verbunden sind, der Verbrennungsmotor (1) also kein geschlossenes Motorgehäuse benötigt.

6. Heiz- bzw. Kühleinrichtung nach Anspruch 5, dadurch gekennzeichnet, daß die Rippe(n) (84) hohl und als Ölpumpengehäuse (71) bzw. Ölzuleitung zu den Zylinderdeckeln (74) ausgebildet ist.

7. Heiz- bzw. Kühleinrichtung nach Anspruch 6, dadurch gekennzeichnet, daß Ölzufuhr zu den Zylinderdeckeln (74) und den Zylinderkühlmänteln (75) über die dadurch intensiv gekühlten Düsenhalter (73) geschieht.

8. Heiz- bzw. Kühleinrichtung nach Anspruch 2, dadurch gekennzeichnet, daß als Motoraufhängung gekühlte Abgasleitungen (23) dienen.

9. Heiz- bzw. Kühleinrichtung nach Anspruch 8, dadurch gekennzeichnet, daß mindestens eine gekühlte Abgasleitung (23) als Nachbrennkammer oder als Brennkammer (95) eines Zusatzbrenners (32) dient.

10. Heiz- bzw. Kühleinrichtung nach einem der Ansprüche 1 bis 9, dadurch gekennzeichnet, daß der Verbrennungsmotor (1) gegen das Ansaugen schädlicher Stoffe aus den Wärmepumpenkreisläufen durch Überdruck im Motorbehälter (11) geschützt ist.

11. Heiz- bzw. Kühleinrichtung nach einem der Ansprüche 1 bis 10, dadurch gekennzeichnet, daß der Motorbehälter (11) dünnwandig ist, wogegen zur Schall- und Wärmeisolierung das die gesamte Einrichtung einschließende Gehäuse in an sich bekannter Weise als mindestens doppelwandiger Wärmespeicher (17) ausgebildet ist, wobei der Wärmeträger zwischen Innenwand und Außenwand des Troges gespeichert ist und von dort zum Kühlmittelkreislauf des Verbrennungsmotors, zum Kältemittelkreislauf einer Kompressionswärmepumpe und zum Stoffpaarkreislauf einer allenfalls vorgesehenen Absorptionswärmepumpe geführt ist, die in dem von der Innenwand des Wärmespeichers (17) umschlossenen Raum angeordnet sind.

12. Heiz- bzw. Kühleinrichtung nach Anspruch 11, dadurch gekennzeichnet, daß die für den Betrieb der Heiz- und Kühlmaschine außer dem Verbrennungsmotor (1) notwendigen rotierenden Maschinen auf einem Wellenstrang (3) angeordnet sind, welcher von der Abtriebswelle (12) in Drehung versetzt wird, wobei die Maschinen auf dem Wellenstrang (3) über den Wärmetauschern angeordnet und nach Abheben eines den Deckel des Wärmespeichers (17) bildenden Brauchwasserbehälters (91) von oben und allen Seiten frei zugänglich ist.

13. Heiz- bzw. Kühleinrichtung nach Anspruch 12, dadurch gekennzeichnet, daß die Wärmetauscher für Verbrennungsmotor (1) und Wärmepumpen einen miteinander verbundenen Block bilden, der eine federnde Verbindung (114) mit dem trogförmig ausgebildeten Wärmespeicher (17) hat und nach Abheben der auf dem Wellenstrang (3) sitzenden Geräte als kompaktes Aggregat ausgehoben werden kann.

14. Heiz- bzw. Kühleinrichtung nach einem der Ansprüche 11 bis 13, dadurch gekennzeichnet, daß der obere Abschluß des trogförmigen Wärmespeichers (17) durch einen quaderförmigen, zur besseren Zugänglichkeit der oben liegenden Apparateanschlüsse in Form eines nach unten offenen Troges ausgebildeten Brauchwasserbehälters (91) mit äußerer Isolation (106) gebildet wird.

15. Heiz- bzw. Kühleinrichtung nach einem der Ansprüche 11 bis 14, dadurch gekennzeichnet, daß der Wärmespeicher (17) von einem Brennstoffbehälter (46) umschlossen wird, welcher als Wärmeschutz und zusätzlicher Wärmespeicher, sowie als Schallschutz dient.

16. Heiz- bzw. Kühleinrichtung nach Anspruch 15, dadurch gekennzeichnet, daß im oberen Teil des Brennstoffbehälters (46) ein Wärmetauscher (45) angeordnet ist, der vom Rücklauf des Heizmediums, beispielsweise Wasser, durchströmt wird.

17. Heiz- bzw. Kühleinrichtung nach einem der Ansprüche 11 bis 16, dadurch gekennzeichnet, daß der Wärmespeicher (17) bzw. der Brennstoffbehälter (46) seitlich von einem Mantel (54) umgeben ist, der unter Belassung eines Zwischenraumes von einer als Ölauf fangwanne dienenden Verschalung (55) umgeben ist und fast bis zum Boden der Verschalung (55) reicht.

## Claims

1. Heating or cooling apparatus which is enclosed in a housing, having at least one heat pump which can be driven by an internal combustion engine, wherein a heat carrier transfers heat from the engine and heat pump or pumps to a heating circuit, characterised in that the internal combustion engine (1) is insulated relative to the heat pump or pumps by a gas-tight engine container (11) which encloses the internal combustion engine (1) including the crankshaft (65) and through which a centrally mounted output shaft (12) passes at least once.

2. Heating or cooling apparatus according to claim 1, characterised in that the internal combustion engine (1) is resiliently suspended in the engine container (11).

3. Heating or cooling apparatus according to claim 1, characterised in that the engine container (11) forms a supply tank, preferably containing a year's supply, for the lubricating oil for the internal combustion engine (1).

4. Heating or cooling apparatus according to claim 3, characterised in that a lubricating-oil heat exchanger (16) is disposed in the engine container (11).

5. Heating or cooling apparatus according to claim 1 or claim 3, characterised in that the cylinder or cylinders (63) of the internal combustion engine (1) are connected together, and to the main bearing blocks and the connection of the lubricating-oil heat exchanger (16), only by at least one rib means (84), and the internal combustion engine (1) therefore does not require a closed engine casing.

6. Heating or cooling apparatus according to claim 5, characterised in that the one or more rib means (84) is or are hollow and is or are formed as an oil pump casing (71) or oil feed conduit to the cylinder heads (74).

7. Heating or cooling apparatus according to claim 6, characterised in that the feed of oil to the cylinder heads (74) and the cylinder cooling jackets (74) is by way of the nozzle holders (73) which are intensively cooled thereby.

8. Heating or cooling apparatus according to claim 2, characterised in that cooled exhaust gas pipes (23) serve as engine mounting means.

9. Heating or cooling apparatus according to claim 8, characterised in that at least one cooled exhaust gas pipe (23) serves as a post combustion chamber or as the combustion chamber (95) of an auxiliary burner (32).

10. Heating or cooling apparatus according to one of claims 1 to 9, characterised in that the internal combustion engine (1) is protected from drawing in noxious substances from the heat pump circuits by an increased pressure in the engine container (11).

11. Heating or cooling apparatus according to one of claims 1 to 10, characterised in that the engine container (11) is of a thin-walled construction, whereas, for the purposes of sound and heat insulation, the housing which encloses the entire apparatus is formed in per se known manner as at least a double-walled heat storage means (17), wherein the heat carrier is stored between the inner and outer walls of the trough and from there is passed to the coolant circuit of the internal combustion engine, to the refrigerant circuit of a compression heat pump and to the circuit for the pair of substances of an absorption heat pump which is possibly provided, such units being disposed in the space enclosed by the inner wall of the heat storage means (17).

12. Heating or cooling apparatus according to claim 11, characterised in that the rotary machines required for driving the heating and cooling machine, besides the internal combustion engine (1), are arranged on a shaft line (3) which is rotated by the output shaft (12), wherein the machines on the shaft line (3) are arranged above the heat exchangers and, after removal of an industrial-use water container (91) forming the cover of the heat storage means (17), are freely accessible from above and all sides.

13. Heating or cooling apparatus according to claim 12, characterised in that the heat exchangers for the internal combustion engine (1) and the heat pumps form an interconnected block which has a resilient connection (114) to the heat storage means (17) of a trough-like construction, and can be removed as a compact unit after removal of the equipment on the shaft line (3).

14. Heating or cooling apparatus according to one of claims 11 to 13, characterised in that the upper closure means of the heat storage means (17) is formed by a square industrial-use water container (91) with outside insulation (106), said container (91) preferably being in the form of a downwardly open trough for better accessibility to the apparatus connections which are disposed at the top.

15. Heating or cooling apparatus according to claims 11 to 14, characterised in that the heat storage means (17) is enclosed by a fuel tank (46) which serves as a heat insulating means and additional heat storage means, and as a sound insulating means.

16. Heating and cooling apparatus according to claim 15, characterised in that in the upper part of the fuel tank (46), a heat exchanger (45) is disposed through which the return flow of the heating medium, for example water, flows.

17. Heating and cooling apparatus according to one of claims 11 to 16, characterised in that the heat storage means (17) or the fuel tank (46) is laterally enclosed by a casing (54) which is surrounded by a jacketing arrangement (55), leaving an intermediate space therebetween, the jacketing arrangement serving as an oil catch tank, and the casing (54) extending almost to the bottom of the jacketing arrangement (55).

**Revendications**

1. Dispositif de chauffage ou refroidissement enfermé dans un carter et comportant au moins une pompe à chaleur pouvant être entraînée par un moteur à combustion interne, un caloporteur assurant la transmission de la chaleur du moteur et de la (des) pompe(s) à chaleur à un circuit de chauffage, caractérisé en ce que le moteur à combustion interne (1) est isolé par rapport à la ou aux pompes a chaleur par un compartiment-moteur (11) étanche aux gaz, qui entoure le moteur à combustion interne (1) y compris le vilebrequin (65) et qui est traverse au moins une fois par un arbre mené (12) monte de façon centrée.

2. Dispositif de chauffage ou refroidissement selon la revendication 1, caractérisé en ce que le moteur à combustion interne (1) est suspendu élastiquement dans le compartiment-moteur (11).

3. Dispositif de chauffage ou refroidissement selon la revendication 1, caractérisé en ce que le compartiment-moteur (11) constitue un récipient de stockage, contenant avantageusement une réserve annuelle, de l'huile de lubrification du moteur à combustion interne (1).

4. Dispositif de chauffage ou refroidissement selon la revendication 3, caractérisé en ce qu'un échangeur de chaleur d'huile de lubrification (16) est logé dans le compartiment-moteur (11).

5. Dispositif de chauffage ou refroidissement selon la revendication 1 ou 3, caractérisé en ce que le ou les cylindres (63) du moteur à combustion interne (1) sont reliés entre eux ou bien aux corps de paliers principaux et au raccord de l'échangeur de chaleur d'huile de lubrification (16) seulement par au moins une nervure (84), de sorte que le moteur à combustion interne (1) ne nécessite pas de carter fermé.

6. Dispositif de chauffage ou refroidissement selon la revendication 5, caractérisé en ce que la (les) nervure(s) (84) sont creuses et sont agencées comme un carter de pompe à huile (71) ou bien comme un conduit d'alimentation en huile des culasses de cylindres (74).

7. Dispositif de chauffage ou refroidissement selon la revendication 6, caractérisé en ce que l'alimentation en huile des culasses de cylindres (74) et des chemises de refroidissement de cylindres (75) est effectuée par l'intermédiaire des supports d'injecteur (73) refroidis ainsi intensivement.

8. Dispositif de chauffage ou refroidissement selon la revendication 2, caractérisé en ce que des tubes d'échappement refroidis (23) servent de suspension pour le moteur.

9. Dispositif de chauffage ou refroidissement selon la revendication 6, caractérisé en ce qu'au moins un tube d'échappement refroidi (23) sert de chambre de postcombustion ou bien de chambre de combustion (95) pour un brûleur additionnel (32).

10. Dispositif de chauffage ou refroidissement selon une des revendications 1 à 9, caractérisé en ce que le moteur à combustion interne (1) est protégé contre l'aspiration de matières nocives provenant des circuits de pompes à chaleur par une surpression dans le compartiment-moteur (11).

11. Dispositif de chauffage ou refroidissement selon une des revendications 1 à 10, caractérisé en ce que le compartiment-moteur (11) est à paroi mince alors que par contre, pour une isolation phonique et thermique, le carter entourant l'ensemble du dispositif est agencé d'une manière connue comme un accumulateur de chaleur (17) au moins a double paroi, auquel cas le caloporteur est accumulé entre la paroi intérieure et la paroi extérieure du bac et est canalisé à partir de là vers le circuit de fluide réfrigérant du moteur à combustion interne, vers le circuit de fluide froid d'une pompe à chaleur à compression et vers le circuit à deux matières d'une pompe à chaleur à absorption prévue si nécessaire, qui sont disposés dans le volume entouré par la paroi intérieure de l'accumulateur de chaleur (17).

12. Dispositif de chauffage ou refroidissement selon la revendication 11, caractérisé en ce que les machines tournantes nécessaires, en dehors du moteur à combustion interne (1), pour le fonctionnement de la machine de chauffage et de refroidissement sont disposées sur une ligne d'arbres (3), qui est entraînée en rotation par l'arbre mené (12) les machines étant placées sur la ligne d'arbres (3) au-dessus des échangeurs de chaleur et étant librement accessibles par le haut et sur tous les côtés apres enlèvement d'un réservoir d'eau de consommation (91) formant le couvercle de l'accumulateur de chaleur (17).

13. Dispositif de chauffage ou refroidissement selon la revendication 12, caractérisé en ce que l'échangeur de chaleur pour le moteur à combustion interne (1) et les pompes à chaleur constituent un ensemble où ils sont reliés entre eux, qui comporte une liaison élastique (114) avec l'accumulateur de chaleur (17) agencé en forme de bac et qui peuvent être soulevés sous la forme d'un groupe compact apres enlevement des appareils montés sur la ligne d'arbres (3).

14. Dispositif de chauffage ou refroidissement selon une des revendications 11 à 13, caractérisé en ce que l'obturation supérieure de l'accumulateur de chaleur (17) en forme de bac est constituée par un réservoir d'eau de consommation (91), comportant une isolation extérieure (106), de forme parallélépipédique et agence, en vue d'une meilleure accessibilité aux raccords d'appareils placés en haut, sous la forme d'un bac ouvert vers le bas.

15. Dispositif de chauffage ou refroidissement selon une des revendications 11 à 14, caractérisé en ce que l'accumulateur de chaleur (17) est entouré par un réservoir de carburant (46), qui sert de protection thermique, d'accumulateur de chaleur additionnel et de protection phonique.

16. Dispositif de chauffage ou refroidissement selon la revendication 15, caractérisé en ce qu'il est prévu dans la partie supérieure du réservoir de carburant (46) un échangeur de chaleur (45) qui est traversé par l'écoulement en retour de fluide chauffant, par exemple de l'eau.

17. Dispositif de chauffage ou refroidissement selon une des revendications 11 à 16, caractérisé en ce que l'accumulateur de chaleur (17) ou le réservoir de carburant (46) est entouré latéralement par une enveloppe (54), qui est elle-même entourée, en laissant un volume intermédiaire, par une enceinte (55) servant de bac récepteur d'huile et qui s'étend jusqu'au fond de l'enceinte (55).

**Fig. 1**

0 085 411

## _Fig. 2_

Fig. 3

Fig. 4

93

23

76

95

32
90

53

*Fig. 5*

93

23

53
32 95

90

76

*Fig. 6*

93

23

76

32
53

90

*Fig. 7*

## Fig. 8

97

25    101    93    76    23

11

22

100

99

32

24

33    26    101    108    93    76    23

## Fig. 9

96    25    99    81    76

97

32

22    93    23    11

102

## Fig. 10